# EUROPÄISCHE PATENTSCHRIFT

(11) **EP 0 884 941 B1**
(45) Veröffentlichungstag und Bekanntmachung des Hinweises auf die Patenterteilung: **06.06.2001**
(21) Anmeldenummer: 97949940.7
(22) Anmeldetag: 17.11.1997
(51) Int. Cl.: A01G 13/02

(54) **VORRICHTUNG ZUM FESTLEGEN VON FOLIEN- ODER VLIESARTIGEM, INSBESONDERE BAHNFÖRMIGEM MATERIAL AM ERDBODEN**
DEVICE FOR LAYING FOIL-LIKE OR SHEET-LIKE TYPE MATERIAL, SPECIALLY STRIP-LIKE MATERIAL ON THE GROUND
DISPOSITIF SERVANT A FIXER SUR LE SOL UN MATERIAU DU TYPE FEUILLE OU NAPPE, EN PARTICULIER EN FORME DE BANDE

(30) Priorität: 21.11.1996 DE 29620294 U
(43) Veröffentlichungstag der Anmeldung: 23.12.1998
(73) Patentinhaber: Krinner, Klaus, 94342 Strasskirchen (DE)
(72) Erfinder: Krinner, Klaus, 94342 Strasskirchen (DE)
(74) Vertreter: Hübner, Helmut E., Dipl.-Ing.
(86) Internationale Anmeldenummer: DE9702694
(87) Internationale Veröffentlichungsnummer: WO9821936

(56) Entgegenhaltungen:
- EP-A- 0 195 760
- FR-A- 2 086 754
- FR-A- 2 427 780
- GB-A- 1 504 967
- GB-A- 2 064 284
- US-A- 4 513 530

## Beschreibung

Die Erfindung betrifft eine Vorrichtung zum Festlegen von folien- oder vliesartigem, insbesondere bahnförmigem Material am Erdboden, entsprechend dem Oberbegriff des Anspruchs 1.

Es ist bekannt, z. B. in den Frühjahrsmonaten zum Schutz von bereits ausgebrachten Pflanzen oder aufgehendem Saatgut die Pflanzen mit Folien oder Vliesen abzudecken. Durch dieses folien- oder vliesartige, zumeist bahnförmige Material erfolgt ein Schutz der Pflanzen oder des Saatgutes vor Witterungseinflüssen, insbesondere Niederschlägen und Kälte.

Stehen die Pflanzen auf einem Acker oder Feld eng aneinander in fortlaufenden Reihen, wobei diese Reihen im gewissen Abstand zueinander parallel verlaufen, ist es bekannt, das bahnförmige Material über den einzelnen Reihen in deren Verlaufsrichtung auszubreiten und beidseits der Reihen durch Beschweren zu befestigen. Dieses Beschweren erfolgt entweder durch auf den Rand des Materials aufgelegte Steine, Holzlatten oder dergleichen, oder aber die beiden in Längsrichtung verlaufenden Seitenränder des Materials werden durch Umgraben oder Umpflügen mit Erde bedeckt.

Diese bekannte Vorgehensweise hat sich aufgrund des Fehlens anderweitiger Maßnahmen oder Vorrichtungen trotz der damit einhergehenden Nachteile etabliert. Als Nachteile bei diesen bekannten Maßnahmen zum Festlegen oder Befestigen des folien- oder vliesartigem Materials am Erdboden seien unter anderem die folgenden genannt:

Es ist bei diesen bekannten Maßnahmen notwendig, das Material vorab zumindest über eine bestimmte Länge über den zu schützenden Pflanzen oder dergleichen auszubreiten, um anschließend die Seitenränder durch das Auflegen von Gegenständen oder durch das beidseitige Ziehen einer Ackerfurche niederzudrücken. Bei windigem Wetter kann jedoch das Material immer wieder hochgeweht und umgeschlagen werden, bevor es gelingt, die Ränder festzulegen.

Das Niederhalten der Ränder mittels Gegenständen, also beispielsweise Holzlatten, Steinen oder dergleichen ist eine umständliche, langwierige und anstrengende Arbeit. Bei größeren Pflanzungen, beispielsweise sogenannten Erdbeerfeldern oder -plantagen kann die Gesamtlänge der einzelnen Pflanzungsreihen ohne weiteres mehrere Kilometer betragen. Entsprechend lang sind dann auch die Vlies- oder Folienabdeckungen und entspechend viele Holzlatten, Steine oder dergleichen müssen zur Verfügung stehen.

Werden die Ränder des folien- oder vliesartigem Materials durch Ziehen einer Ackerfurche niedergedrückt, entfällt zwar das umständliche Auflegen von Gegenständen zum Beschweren und deren nachträgliches Entfernen im Zuge des Abnehmens der Abdeckung, jedoch erfordert das Ziehen einer Ackerfurche einen gewissen Platzbedarf. Im Falle von nebeneinander verlaufenden Pflanzungsreihen muß der Platz zwischen den einzelnen Pflanzungsreihen sogar so groß sein, um zwei Ackerfurchen ziehen zu können, um die zwischen den einzelnen Pflanzungsreihen liegenden beiden Ränder der jeweiligen Abdeckungen niederdrücken zu können. Hierdurch verkleinert sich die nutzbare Anbaufläche in nachteiliger Weise.

Weiterhin entsteht durch das Umpflügen beidseits der Abdeckungen ein mehr oder weniger-hoher Erdwall, der im Falle einer wasserundurchlässigen Abdeckung aus Kunststoffolie verhindern kann, daß Regen- oder Tauwasser seitlich von der Folie herunterlaufen kann. Es können sich somit auf der Folienabdeckung Wasserpfützen bilden, welche unter Umständen die darunter liegenden Pflanzen niederdrücken und beschädigen können.

Weitere Vorrichtungen zum Festlegen bahnförmiger Folienabdeckungen sind aus GB-A-1504967 oder GB-A-2064284 bekannt. Diese weisen eine drehbare Trennscheibe auf, welche unter Ausbildung eines Schnittes auf der Oberfläche des Materials abrollt und dieses in den sich unter dem Material ausbildenden Schnitt drücht. Durch die dabei enstehende Relativbewegung zwischen Trennscheibe und Material kann es zu einem Durchschneiden oder Durchtrennen des Materials kommen.

Demgegenüber ist es Aufgabe der vorliegenden Erfindung, eine Vorrichtung der eingangs genannten Art zu schaffen, mit der ein folien- oder vliesartiges, insbesondere bahnförmiges Material rasch und zuverlässig am Erdboden festgelegt werden kann, ohne das die geschilderten Nachteile auftreten.

Zur Lösung dieser Aufgabe schlägt die vorliegende Erfindung eine Vorrichtung gemäß Anspruch 1 vor.

Durch die Vorrichtung gemäß der vorliegenden Erfindung läßt sich das Festlegen von folien- oder vliesartigem Abdeckmaterial ganz erheblich vereinfachen und rationalisieren. Es genügt, die Vorrichtung entlang eines Seitenrandes des Materials zu bewegen, wobei in einem Zug in dem Erdboden ein Schnitt ausgebildet wird, in welchen der Rand des Materials hineingedrückt wird, wonach dann durch die nachlaufende Andrückvorrichtung das Erdreich zumindest entlang der Schnittränder wieder so verdichtet wird, daß es sich an das im Schnitt liegende Material anlegt, so daß das Material in dem Schnitt sicher gehalten ist. Die Vorrichtung kann entweder von Hand oder unter Zuhilfenahme einer leichten Zugmaschine entlang der einzelnen Seitenränder des Materials bewegt werden, um diese festzulegen.

Das umständliche, zeitaufwendige und anstrengende Auflegen von Gegenständen zum Beschweren der Seitenränder des bahnförmigen Materials entfällt.

Ebenso entfällt die Notwendigkeit, zwischen den einzelnen Pflanzungsreihen so viel Raum zur Verfügung zu stellen, daß zwei nebeneinander liegende Ackerfurchen gezogen werden können, um das Material mittels Erdreich zu beschweren.

Die erfindungsgemäße Vorrichtung kann als kompakte und gegenüber einem Pflug leichte Einheit ausgestaltet werden, so daß auch entsprechend leichte Zugmaschinen ausreichen, die erfindungsgemäße Vorrichtung entlang der Seitenränder des Materials zu bewegen. Gegebenenfalls kann sogar auf Zugmaschinen gänzlich verzichtet werden und die erfindungsgemäße Vorrichtung kann von Hand bewegt werden. Insbesondere im Frühjahr, wenn das Erdreich durch Niederschläge und Tauvorgänge stark durchfeuchtet und schwer ist, ist es vorteilhaft, auf schwere Zugmaschinen mit den damit einhergehenden Bodenverdichtungen verzichten zu können.

Vorteilhafte Weiterbildungen der Erfindung sind Gegenstand der Unteransprüche.

Die Trennvorrichtung umfaßt eine drehbare Trennscheibe, welche unter Ausbildung des Schnittes auf der Oberfläche des Materials abrollt und dieses in den sich unter dem Material ausbildenden Schnitt drückt. Aufgrund der drehbaren Trennscheibe kann die Ausbildung des Schnittes und das Eindrücken des Materials in den sich bildenden Schnitt mit geringem Kraftaufwand folgen, da sich die Trennscheibe im Zuge der Bewegung der gesamten Vorrichtung entlang des Seitenrandes des Materials allmählich bis zu der gewünschten Tiefe in den Erdboden eindrückt. Durch die gleichzeitige Abwälzbewegung der Trennscheibe kann dieses Eindrücken mit geringem Kraftaufwand erfolgen.

Die Trennscheibe ist derart zwangsangetrieben, daß ihre Umfangsgeschwindigkeit der Fortbewegungsgeschwindigkeit der gesamten Vorrichtung im wesentlichen entspricht. Hierdurch erfolgt keine Relativbewegung zwischen der Lauffläche oder dem Umfang der Trennscheibe und dem darunter liegenden Material, welche ansonsten zu einem Durchschneiden oder Durchtrennen des Materials führen kann.

Die Andrückvorrichtung weist wenigstens ein hinter der Trennvorrichtung laufendes, die Schnittränder nieder- und damit zusammendrückendes Rad auf. Dies stellt eine konstruktiv einfache, jedoch zuverlässig arbeitende Ausgestaltung der Andrückvorrichtung dar. Weiterhin ist durch die Ausbildung der Andrückvorrichtung in Form eines Rades auch der Vorgang des Andrückens mit geringem Kraftaufwand möglich.

Die Lauffläche des Rades der Andrückvorrichtung hat bevorzugt eine die Breite des Schnittes übersteigende Breite, um ein zuverlässiges Andrücken zumindest der Schnittränder und damit ein zuverlässiges Festlegen des Materials im Schnitt zu gewährleisten.

Weiterhin kann das Rad gemäß einer Ausgestaltungsform in seiner Lauffläche eine im wesentlichen V-förmige Nut aufweisen. Hierdurch wird der Andrückvorgang der beiden seitlichen Ränder des Schnittes in Richtung des dazwischen liegenden Materials noch weiter intensiviert.

Gemäß einer weiteren Ausgestaltungsform kann die Andrückvorrichtung zwei nebeneinander laufende und voneinander beabstandete Räder aufweisen, welche beidseits des Schnittes angeordnet sind. Auch hierdurch werden die beiden seitlichen Schnittränder und gegebenenfalls auch noch das unter den Schnitträndern liegende Material des Erdbodens aufeinander zu und damit in Richtung auf das dazwischen liegende Material gedrückt.

Die beiden Räder können hierbei zueinander parallel sein und um eine gemeinsame Achse umlaufen, oder aber die beiden Räder können zueinander geneigt sein und jeweils um eine eigene Achse umlaufen, wobei die beiden Achsen in Abrollrichtung der Räder in einer im wesentlichen horizontalen Ebene zueinander geneigt sind. Insbesondere durch die zweite Anordnungsmöglichkeit der beiden Räder erfolgt eine noch weiter intensivierte Andrückung der Schnittränder oder Schnittwände an das dazwischen liegende Material.

Bevorzugt hat die Trennscheibe gegenüber dem Rad oder den Rädern der Andrückvorrichtung größeren Durchmesser. Je größer der Durchmesser der Trennscheibe, um so leichter ist die Abwälz- oder Abrollbewegung und um so tiefer kann gegebenenfalls der Schnitt im Erdboden gemacht werden.

Weiterhin bevorzugt ist die Lauffläche der Trennscheibe ballig oder abgerundet ausgebildet. Hierdurch kann im wesentlichen vermieden werden, daß im Zuge der gleichzeitigen Schnittausbildung und Eindrückung des Materials in den Schnitt insbesondere bei Erdreich, welches der Schnittausbildung einen gewissen Widerstand entgegensetzt, die Trennscheibe das folien- oder vliesartige Material durchtrennt.

Die Trennvorrichtung und die Andrückvorrichtung sind mit einstellbarer Auflagekraft auf das Material auflegbar. Hierdurch kann der Art des Materials bzw. dessen Widerstandsfähigkeit, sowie Art und Beschaffenheit des Erdbodens Rechnung getragen werden.

Bevorzugt sind die Trennvorrichtung und die Andrückvorrichtung in einem gemeinsamen Lagergestell geführt, welches um eine horizontale Achse schwenkbeweglich an einer Zugstange gelagert ist, wobei zwischen Zugstange und Lagergestell eine Feder geschaltet ist, welche die Trennvorrichtung und die Andrückvorrichtung in Richtung auf das Material vorspannt. Hierdurch wird es zunächst möglich, aufgrund von Eigengewicht der Vorrichtung und Stärke der Feder den Grad der Andrückung zu wählen, um eine Anpassung an den Widerstand des Erdbodens gegenüber der Schnittausbildung zu erhalten. Durch die schwenkbewegliche Lagerung des Lagergestells ist darüber hinaus die Möglichkeit geschaffen, daß die Trennscheibe bei nicht durchtrennbarem Widerstand im Boden, beispielsweise größeren Steinen, Wurzeln oder dergleichen eine Ausweichbewegung nach oben ausführen kann. Eigengewicht der Vorrichtung und die zwischengeschaltete Feder sorgen dann wieder dafür, daß die Trennscheibe nach dem Überfahren des Hindernisses oder Widerstandes wieder in dem Erdboden eintaucht.

Weiterhin bevorzugt ist das Rad oder sind die Räder der Andrückvorrichtung gegenüber dem Lagergestell höhenverstellbar. Zusammen mit der Feder zwischen Zugstange und Lagergestell kann hierdurch die Eindringtiefe der Trennscheibe in das Erdreich eingestellt werden.

Bevorzugt wird das festzulegende Material in Bahnform kontinuierlich von einer der Trennvorrichtung vorgeschalteten Trommel abgegeben und unter die Trennvorrichtung geführt. Ist hierbei die Trennvorrichtung so ausgebildet, daß sie zwei Trennscheiben aufweist, welche nebeneinander in einem derartigen Abstand liegen, wobei die Breite des bahnförmigen Materials nicht überstiegen wird, kann das bahnförmige Material in einem Zug an beiden Seitenrändern gegenüber dem Erdboden festgelegt werden.

Weitere Einzelheiten, Aspekte und Vorteile der vorliegenden Erfindung ergeben sich aus der nachfolgenden Beschreibung einer Ausführungsform anhand der Zeichnung.

Es zeigt:
Fig. 1 eine schematisch vereinfachte Seitenansicht der erfindungsgemäßen Vorrichtung;
Fig. 2 eine Draufsicht von oben auf die Vorrichtung von Fig. 1;
Fig. 3 eine Ansicht von hinten auf die Vorrichtung in einer Ebene entsprechend der Linie III-III in Fig. 1; und
Fig. 4 eine Fig. 3 entsprechende Ansicht entlang der Linie IV-IV in Fig. 1.

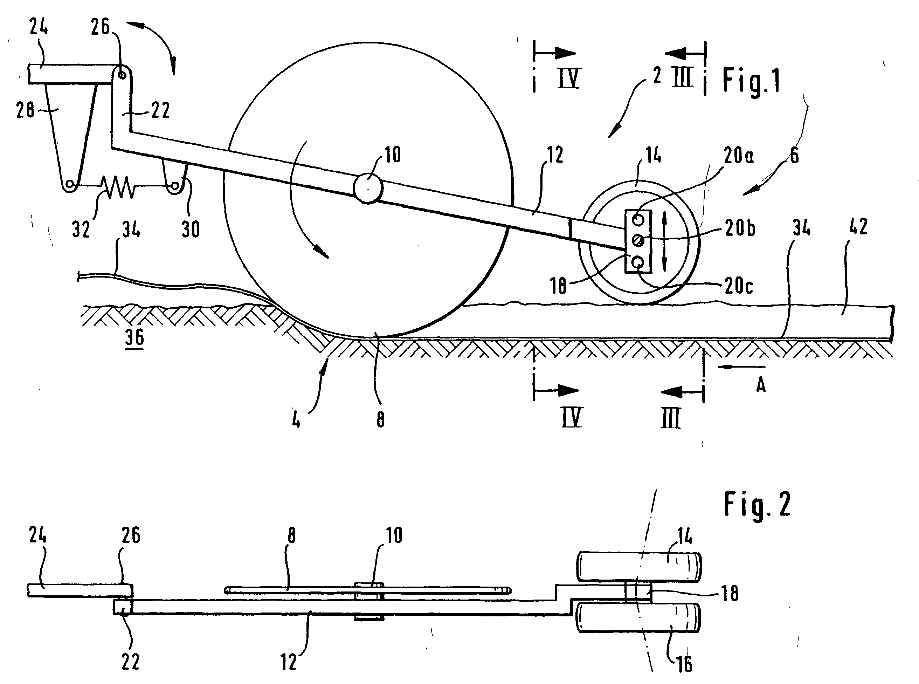

Eine in der Zeichnung insgesamt mit 2 bezeichnete erfindungsgemäße Vorrichtung umfaßt gemäß Fig. 1 im wesentlichen eine Trennvorrichtung 4 und eine Andrückvorrichtung 6. Hierbei ist gemäß der Zeichnung die Trennvorrichtung 4 in Form einer Trennscheibe 8 ausgelegt, welche mittels eines Lagers 10 drehbeweglich an einem Lagergestell 12 geführt ist. Ebenfalls drehbeweglich an dem Lagergestell 12 ist die Andrückvorrichtung 6 in Form wenigstens eines, in der dargestellten Ausführungsform zweier Räder 14 und 16 gelagert. Die Lagerung der Räder 14 und 16 an dem Lagergestell 12 erfolgt mittels einem an dem Lagergestell 12 befestigten Lagerständer 18, der eine Mehrzahl von Lagerungsmöglichkeiten für die Drehachse oder die Drehachsen der Räder 14 und 16 bietet. Im in Fig. 1 dargestellten Ausführungsbeispiel weist der Lagerständer insgesamt drei Drehlager 20a bis 20c auf.

Am der Andrückvorrichtung 6 gegenüberliegenden Ende ist das Lagergestell 12 über eine Abkröpfung 22 drehbeweglich an einer Zugstange 24 gelagert. Die Verbindung zwischen Abkröpfung 22 und Zugstange 24 erfolgt über ein Drehgelenk 26. Gemäß Fig. 1 weist die Zugstange 24 in der Nachbarschaft des Gelenks 26 einen nach unten weisenden Flansch 28 auf und ebenso weist das Lagergestell 12 im Nahbereich der Abkröpfung 22 einen nach unten weisenden Flansch 30 auf. Zwischen den beiden Flanschen 28 und 30 ist eine Zugfeder 32 eingespannt. Durch die Zugfeder 32 wird das Lagergestell 12 in Fig. 1 im Uhrzeigersinn um das Gelenk 26 drehend vorgespannt.

Über die Zugstange 24 ist die gesamte Vorrichtung 2 an einer Zugmaschine oder dergleichen anhängbar. Die Bewegungsrichtung der Vorrichtung 2 verläuft in Fig. 1 in Richtung des Pfeiles A von rechts nach links.

Nachfolgend soll - weiterhin unter Bezugnahme auf die Zeichnung - die Funktions- und Arbeitsweise der erfindungsgemäßen Vorrichtung 2 näher erläutert werden.

Zum Befestigen oder Festlegen eines folien- oder vliesartigen, insbesondere bahnförmigen Materials 34 (nachfolgend als "Vlies" bezeichnet) gegenüber dem Erdboden 36 wird wie folgt verfahren:

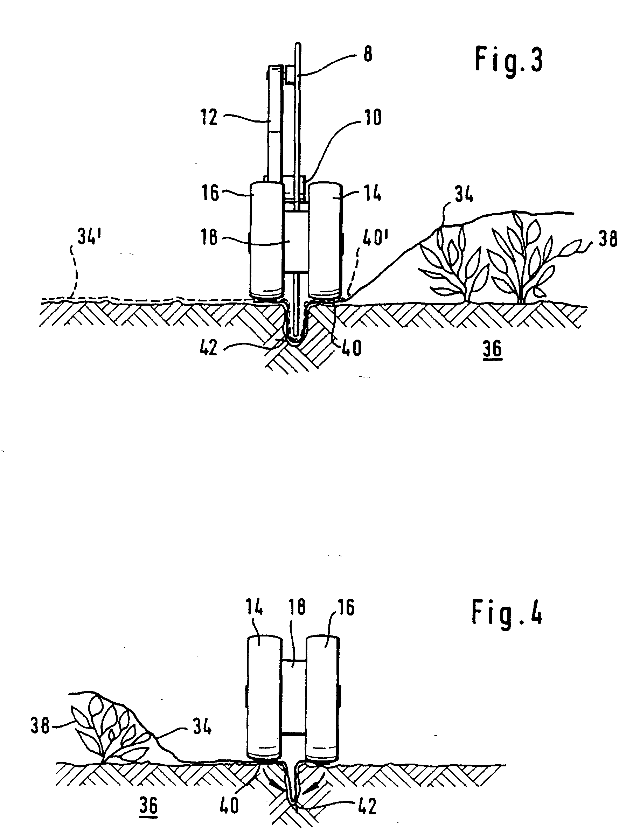

Das Vlies 34 wird auf dem Erdboden 36 ausgelegt, wobei es gemäß den Figuren 3 und 4 -eine Pflanze oder Staude 38 überdeckt. Sind die Pflanzen 38 hintereinander fortlaufend in einer Reihe angepflanzt, überdeckt das bahnförmige Vlies 34 ebenfalls entsprechend die Reihe der Pflanzen 38 und liegt mit seinen beiden seitlichen Rändern (Rand 40 in den Figuren 3 und 4 dargestellt) auf dem Erdboden 36 beiderseits der Pflanzreihe auf. Sobald das Vlies 34 derart über der Pflanzenreihe ausgelegt worden ist, wird die Vorrichtung 2 in der aus Fig. 1 ersichtlichen Weise entlang des Randes 40 des Vlieses 34 bewegt. Die in Bewegungsrichtung der Vorrichtung 2 vorlaufende Trennscheibe 8 der Trennvorrichtung 4 wälzt sich hierbei auf der Bodenoberfläche des Erdbodens 36 bzw. der Oberseite des darüber liegenden Vlieses 34 ab und aufgrund des Eigengewichtes der Vorrichtung 2 und der Spannung der Zugfeder 32 schneidet die Trennscheibe 8 der Trennvorrichtung 4 einen spalt- oder schlitzförmigen, im wesentlichen vertikal stehenden Schnitt 42 in den Erdboden 36, wobei im Zuge der Ausbildung des Schnittes 42 das Material des Vlieses 34 von der Lauffläche der Trennscheibe 8 in diesen Schnitt 42 hineingedrückt wird, wie in Fig. 3 gezeigt.

Die Eindringtiefe der Trennscheibe 8 in den Erdboden 36 und damit die Tiefe des Schnittes 42 hängt von mehreren Faktoren ab. Zunächst wird durch die Lagerung der Andrückvorrichtung 6 bzw. der dortigen Räder 14 und 16 an dem Lagerständer 18 bestimmt, wie weit die Trennscheibe 8 in den Erdboden 36 eindringen kann. Erfolgt die Lagerung in dem Lager 20a, ist die Eindringtiefe der Trennscheibe 8 in den Erdboden 36 weniger tief als bei einer Lagerung in dem Lager 20b oder 20c. Weiterhin ist, je größer der Durchmesser der Trennscheibe 8 ist, bei gegebener Lage des Drehlagers 10 die Eindringtiefe der Trennscheibe 8 um so größer.

Um sicherzustellen, daß der in den Schnitt 42 gedrückte Rand des Vlieses 34 auch sicher in diesem Schnitt 42 gehalten wird, ist der Trennscheibe 8 in Fahrtrichtung oder Bewegungsrichtung der Vorrichtung 2 die Andrückvorrichtung 6 nachgeschaltet. Das Rad oder die Räder 14 und 16 der Andrückvorrichtung 6 laufen gemäß Fig. 4 beidseits des Schnittes 42 und drücken durch Bodenverdichtung zumindest die oberflächennahen Ränder des Schnittes 42 aufeinander zu (Pfeile beidseits des Schnittes 42 in Fig. 4), so daß das Vlies 34 bzw. dessen im Schnitt 42 verlaufender Randstreifen von dem angedrückten Erdreich im Schnitt 42 festgelegt wird.

Diese Andrück- oder Verdichtungsfunktion kann gegebenenfalls dadurch verstärkt werden, daß die beiden Räder 14 und 16 in Fahrtrichtung der Vorrichtung 2 gesehen leicht verschränkt oder auseinandergeneigt sind, das heißt die Räder 14 und 16 laufen jeweils auf eigenen Achsen, die - wie in Fig. 2 strichpunktiert veranschaulicht - in einer im wesentlichen horizontalen Ebene liegen, jedoch in Fahrtrichtung nach vorne gesehen zueinander V-förmig geneigt-sind.

Ebenso kann anstelle der in der Zeichnung dargestellten Ausführungsform der Andrückvorrichtung 6 mit den beiden Rädern 14 und 16 anstelle dieser beiden Räder 14 und 16 ein einzelnes Rad verwendet werden, welches dann an dem Lagergestell 12 so zu lagern ist, daß es über dem von der Trennscheibe 8 geschaffenen Schnitt 42 zu liegen kommt. Die Breite dieses einzelnen Rades ist hierbei so, daß die Breite des Schnittes 42 nach beiden Seiten hin ausreichend weit überschritten wird, um die Ränder des Schnittes 42 aufeinander zu verdichten zu können. Hierbei kann gegebenenfalls die Lauffläche des einzelnen Rades in der Andrückvorrichtung 6 eine umlaufende V-förmige Nut aufweisen. Die tiefste Stelle der V-förmigen Nut liegt dann bei der Abrollbewegung des einzelnen Rades etwa in der Ebene des Schnittes 42, so daß die beiden Flanken der V-förmigen Nut die Ränder des Schnittes 42 aufeinander zu drücken können, wodurch das dazwischen liegende Vlies 34 ebenfalls eingeklemmt wird.

Die Tendenz der Trennscheibe 8, das Vlies 34 zu durchtrennen, wird dadurch vermindert oder sogar beseitigt, daß die Trennscheibe 8 derart zwangsangetrieben wird, daß ihre Umfangsgeschwindigkeit der Fortbewegungsgeschwindigkeit der Vorrichtung 2 entspricht, so daß keine Relativbewegung oder kein Schlupf zwischen der Lauffläche der Trennscheibe 8 und dem Vlies 34 vorhanden ist.

Die Lauffläche der Trennscheibe 8 ist bevorzugt ballig oder halbrund ausgebildet, um zusätzlich zu vermeiden, daß bei besonders hartem Boden die Trennscheibe 8 das Vlies 34 nach Art eines Rollmessers durchtrennt.

Das Eindringen der Trennscheibe 8 in den Erdboden 36 erfolgt zum einen unter dem Eigengewicht der gesamten Vorrichtung 2 und zum anderen unter der Einwirkung der Zugfeder 32, welche das Lagergestell 12 in Fig. 1 im Uhrzeigersinn und damit die Trennscheibe 8 nach unten vorspannt, bis die Räder 14 und 16 auf der Oberfläche des Erdbodens 36 bzw. des Vlieses 34 aufsetzen. Gerät die Trennscheibe 8 im Zuge der Vorwärtsbewegung der Vorrichtung 2 an ein Hindernis im Erdboden 36, welches von ihr nicht zur Seite gedrängt werden kann, also beispielsweise auf einem größeren Stein, auf eine Wurzel oder dergleichen, gestattet die schwenkbeweglich Lagerung des Lagergestells 12 an der Zugstange 24 über das Gelenk 26 eine Ausweichbewegung der Trennscheibe 8 in Fig. 1 nach oben entgegen dem Uhrzeigersinn, so daß sichergestellt ist, daß die Trennscheibe 8 nicht das Vlies 34 mit dem harten Gegenstand im Boden als Widerlager durchtrennt.

Das Verlegen und Befestigen des Vlieses 34 kann gemäß einer weiteren bevorzugten Ausgestaltungsform der Erfindung kontinuierlich erfolgen, das heißt, das Vlies 34 muß nicht vorab über den Pflanzreihen ausgelegt und nachfolgend beiderseits randseitig mit der Vorrichtung 2 festgelegt werden. Diese Vorgehensweise ist zwar denkbar, jedoch in der Praxis etwas ungünstig insofern, als dann stets die Wahrscheinlichkeit besteht, daß das Vlies 34 vor seiner Befestigung durch Windkräfte angehoben oder umgeschlagen wird. Zur kontinuierlichen Verlegung mit nachfolgender Befestigung des Vlieses 34 ist das Vlies 34 beispielsweise als Rolle aufgewickelt in Fahrtrichtung der Vorrichtung 2 vor der Trennvorrichtung 4 beispielsweise am Heck der Zugmaschine gelagert. Im Zuge des Fahrens wird das Vlies 34 von der Rolle abgespult und über die Pflanzreihen gelegt und dann mit zwei der oben beschriebenen Vorrichtungen, welche sich beiderseits an den Längsrändern des Vlieses 34 befinden, links und rechts von der Pflanzreihe gleichzeitig in den Erdboden 36 gedrückt und dort befestigt.

Eine weitere Ausgestaltungsmöglichkeit der vorliegenden Erfindung kann darin bestehen, daß der Trennscheibe 8, welche in einem Zug den Schnitt 42 ausbildet und das Vlies 34 in diesen Schnitt drückt, eine separate Trennscheibe in Laufrichtung der gesamten Vorrichtung 2 vorgeschaltet ist, welche bereits vor der Trennscheibe 8 den Schnitt 42 zumindest teilweise, bevorzugt aber ganz ausbildet. Das Vlies 34 wird über diese separate Trennscheibe und zwischen dieser und der nachlaufenden Trennscheibe 8 in Richtung Erdboden 36 geführt, verläuft also nicht unter die separate Trennscheibe. Die nachlaufende Trennscheibe 8 hat dann nur noch die Aufgabe, gegebenenfalls den von der vorlaufenden Trennscheibe ausgebildeten Schnitt 42 noch breiter und/oder tiefer zu machen und das Vlies 34 in den Schnitt 42 zu drücken. Speziell bei schweren oder harten Böden und/oder empfindlichen Vlies- oder Folienmaterialien kann diese Ausgestaltungsform zuverlässig verhindern, daß das Vlies 34 im Bereich der Trennscheibe 8 durchtrennt wird oder reißt.

Mit der erfindungsgemäßen Vorrichtung 2 läßt sich somit das Vlies 34 rasch und zuverlässig beiderseits der Pflanzreihen im Erdboden 36 befestigen. Es sind keine zusätzlichen Gegenstände wie Steine, Holzlatten oder dergleichen notwendig, um das Vlies sicher vor Windkräften zu schützen. Die Befestigung des Vlieses erfolgt im wesentlichen entlang der gesamten Längserstreckung beiderseits der Pflanzreihen, so daß Windkräfte keine oder nur geringfügige Angriffspunkte finden. Im Falle der Verwendung einer wasserundurchlässigen Folie gestattet die mit der erfindungsgemäßen Vorrichtung 2 erzielte Befestigung ein weitestgehend ungehindertes Ablaufen von Regen- oder Tauwasser, so daß die Folie nicht durch sich bildende Wasserpfützen auf die Pflanzen 38 gepreßt wird.

Stöße oder Überlappungen zweier einander folgender Vliese oder Folien bzw. zweier benachbarter Vliese oder Folien können ebenfalls in einem Zug hergestellt werden. So kann beispielsweise gemäß Fig. 3 in ein und denselben Schnitt 42 eine Befestigung zweier zueinander parallel verlaufender Vliese 34 und 34' erfolgen, wobei die Vliese 34 und 34' im Bereich des Schnittes 42 über-bzw. nebeneinander liegen und beidseits vom Erdboden 36 gehalten werden.

Zum Entfernen des Vlieses oder der Folie genügt es, das Vlies oder die Folie aus dem Schnitt 42 herauszuziehen. Gegebenenfalls kann dies wieder derart erfolgen, daß ein zentrales Aufnahmeorgan, beispielsweise eine angetriebene Wickeltrommel an einem Fahrzeug angeordnet ist, welches zwischen den Pflanzreihen fährt und das Vlies oder die Folie kontinuierlich aufnimmt.

## Patentansprüche

1. Vorrichtung zum Festlegen von folien- oder vliesartigem, insbesondere bahnförmigem Material (34) am Erdboden (36), mit
einer entlang wenigstens eines Seitenrandes des Materials (34) bewegbaren und auf das Material (34) von oben her drückenden und gleichzeitig im Erdboden (36) einen im wesentlichen vertikalen Schnitt (42) bildenden Trennvorrichtung (4) in Form einer drehbaren Trennscheibe (8), welche unter Ausbildung des Schnittes (42) auf der Oberfläche des Materials (34) abrollt und dieses in den sich unter dem Material (34) ausbildenden Schnitt (42) drückt; und
einer der Trennvorrichtung (4) nachlaufenden Andrückvorrichtung (6) in Form wenigstens eines hinter der Trennvorrichtung (4) laufenden, die Schnittränder nieder- und damit zusammendrückenden Rades, welches damit zumindest die Schnittränder an das im Schnitt (42) liegende Material (34) andrückt,
dadurch gekennzeichnet, daß
die Trennscheibe (8) zwangsangetrieben ist derart, daß ihre Umfangsgeschwindigkeit der Fortbewegungsgeschwindigkeit der Vorrichtung (2) im wesentlichen entspricht.

2. Vorrichtung nach Anspruch 1, dadurch gekennzeichnet, daß die Lauffläche des Rades eine die Breite des Schnittes übersteigende Breite hat.

3. Vorrichtung nach Anspruch 1 oder 2, dadurch gekennzeichnet, daß das Rad in seiner Lauffläche eine im wesentlichen V-förmige Nut aufweist.

4. Vorrichtung nach einem der Ansprüche 1 bis 3, dadurch gekennzeichnet, daß die Andrückvorrichtung (6) zwei nebeneinander laufende und voneinander beabstandete Räder (14, 16) aufweist, welche beidseits des Schnittes (42) angeordnet sind.

5. Vorrichtung nach Anspruch 4, dadurch gekennzeichnet, daß die beiden Räder (14, 16) zueinander parallel sind und um eine gemeinsame Achse umlaufen.

6. Vorrichtung nach Anspruch 4, dadurch gekennzeichnet, daß die beiden Räder (14, 16) zueinander geneigt sind und jeweils um eine eigene Achse umlaufen, wobei die beiden Achsen in Abrollrichtung der Räder (14, 16) gesehen in einer im wesentlichen horizontalen Ebene zueinander geneigt sind.

7. Vorrichtung nach einem der Ansprüche 1 bis 6, dadurch gekennzeichnet, daß die Trennscheibe (8) gegenüber dem Rad oder den Rädern (14, 16) einen größeren Durchmesser hat.

8. Vorrichtung nach einem der Ansprüche 1 bis 7, dadurch gekennzeichnet, daß die Lauffläche der Trennscheibe (8) ballig ausgebildet ist.

9. Vorrichtung nach einem der Ansprüche 1 bis 8, dadurch gekennzeichnet, daß Trennvorrichtung (4) und Andrückvorrichtung (6) mit einstellbarer Auflagekraft auf dem Material (34) aufliegen.

10. Vorrichtung nach Anspruch 9, dadurch gekennzeichnet, daß Trennvorrichtung (4) und Andrückvorrichtung (6) in einem gemeinsamen Lagergestell (12) geführt sind, welches um eine horizontale Achse (26) schwenkbeweglich an einer Zugstange (24) gelagert ist, wobei zwischen Zugstange (24) und Lagergestell (12) eine Feder (32) geschaltet ist, welche Trennvorrichtung (4) und Andrückvorrichtung (6) in Richtung auf das Material (34) vorspannt.

11. Vorrichtung nach Anspruch 10, dadurch gekennzeichnet, daß das Rad oder die Räder (14, 16) der Andrückvorrichtung (6) gegenüber dem Lagergestell (12) höhenverstellbar ist bzw. sind.

12. Vorrichtung nach einem der Ansprüche 1 bis 11, dadurch gekennzeichnet, daß das Material (34) in Bahnform kontinuierlich von einer der Trennvorrichtung (4) vorgeschalteten Trommel abgebbar und unter die Trennvorrichtung (4) führbar ist, wobei die Trennvorrichtung (4) zwei quer voneinander beabstandete Trennscheiben (8) aufweist, welche im Bereich der beiden Seitenränder des Materials (34) angeordnet sind und denen jeweils eine Andrückvorrichtung (6) nachgeschaltet ist.

## Claims

1. Device for laying foil- or sheet-like material, especially strip-like material (34) on the ground (36), comprising
a separating device (4) in the form of a rotatable separating disc (8) which is movable along at least one side edge of said material (34) and presses onto said material (34) from the top, and simultaneously forms a substantially vertical cut (42) in said ground (36), said separating device (4) rolling along the surface of said material (34) while performing said cut (42) and pressing said material (34) into said cut (42) forming below said material (34); and
a pressing device (6) following said separating device (4) in the form of at least one wheel travelling behind said separating device (4) and pressing the cutting edges down and thus together, said wheel pressing at least the cutting edges against said material (34) located in said cut (42),
characterised in that
said separating disc (8) is compulsory-driven in such a way that its circumferential speed substantially corresponds to the travelling speed of said device (2).

2. Device in accordance with claim 1, characterised in that the running surface of said wheel has a width exceeding the width of said cut.

3. Device in accordance with claim 1 or 2, characterised in that the wheel comprises a substantially V-shaped groove in the running surface thereof.

4. Device in accordance with one of claims 1 to 3, characterised in that said pressing device (6) comprises two wheels (14, 16) travelling side by side at a distance from each other and being arranged at both sides of said cut (42).

5. Device in accordance with claim 4, characterised in that said two wheels (14, 16) are parallel to each other and rotate about a common axis.

6. Device in accordance with claim 4, characterised in that said two wheels (14, 16) are inclined towards each other and rotate about respective axes that are inclined toward each other in the forward rolling direction of said wheels (14, 16) in a substantially horizontal plane.

7. Device in accordance with one of claims 1 to 6, characterised in that said separating disc (8) has a diameter larger than that of said wheel or said wheels (14, 16).

8. Device in accordance with one of claims 1 to 7, characterised in that the running surface of said separating disc (8) is curved.

9. Device in accordance with one of claims 1 to 8, characterised in that said separating device (4) and said pressing device (6) are placed on said material (34) with adjustable pressure.

10. Device in accordance with claim 9, characterised in that said separating device (4) and said pressing device (6) are accommodated in a common mounting rack (12) which is mounted on a connecting rod (24) and can be pivotally moved about a horizontal axis (26), wherein a spring (32) is provided between said connecting rod (24) and said mounting rack (12) which preloads said separating device (4) and said pressing device (6) in the direction of said material (34).

11. Device in accordance with claim 10, characterised in that said wheel or said wheels (14, 16) of said pressing device (6) is or are adjustable in height relative to said mounting rack (12).

12. Device in accordance with one of claims 1 to 11, characterised in that said material (34) can be dispensed continuously in the form of strips by a drum positioned in front of said separating device (4) and can be guided under said separating device (4), said separating device (4) comprising two separating discs (8) which are arranged at axial distance and which are positioned in the area of the two side edges of said material (34), and each of which is followed by a pressing device (6).

## Revendications

1. Dispositif pour fixer sur le sol (36) un produit (34) sous forme de film ou de feutre, en particulier sous forme de bande, comportant
un dispositif de coupe (4), sous la forme d'un disque (8) rotatif, déplaçable le long d'au moins un bord latéral du matériau (34), qui exerce une pression par le dessus sur le matériau (34) et réalise simultanément une saignée (42) essentiellement verticale dans le sol (36), et qui, en réalisant la saignée (42), roule sur la surface du matériau (34) et enfonce celui-ci dans la saignée (42) qui se forme sous le matériau (34), et
un dispositif presseur (6) disposé derrière le dispositif de coupe (4), sous la forme d'au moins une roue roulant derrière le dispositif de coupe (4), qui presse et referme les bords de la saignée et qui applique au moins les bords de la saignée sur le matériau (34) inséré dans celle-ci,
caractérisé en ce que
le disque de coupe (8) est entraîné d'une manière telle, que sa vitesse périphérique corresponde sensiblement à la vitesse de déplacement du dispositif (2).

2. Dispositif selon la revendication 1, caractérisé en ce que la surface de roulement de la roue a une largeur supérieure à la largeur de la saignée.

3. Dispositif selon la revendication 1 ou 2, caractérisé en ce que la roue comporte une gorge essentiellement en V dans sa surface de roulement.

4. Dispositif selon une des revendications 1 à 3, caractérisé en ce que le dispositif presseur (6) comporte deux roues (14, 16) disposées l'une à côté de l'autre et écartées l'une de l'autre qui sont disposées de part et d'autre de la saignée (42).

5. Dispositif selon la revendication 4, caractérisé en ce que les deux roues (14, 16) sont mutuellement parallèles et tournent autour d'un axe commun.

6. Dispositif selon la revendication 4, caractérisé en ce que les deux roues (14, 16) sont inclinées l'une par rapport à l'autre et tournent chacune autour d'un axe propre, les deux axes, vu dans la direction de roulement des roues (14, 16), étant inclinés l'un par rapport à l'autre dans un plan essentiellement horizontal.

7. Dispositif selon une des revendications 1 à 6, caractérisé en ce que le disque de coupe (8), par rapport à la roue ou aux roues (14, 16), présente un diamètre plus grand.

8. Dispositif selon une des revendications 1 à 7, caractérisé en ce que la surface de roulement du disque de coupe (8) est bombée.

9. Dispositif selon une des revendications 1 à 8, caractérisé en ce que le dispositif de coupe (4) et le dispositif presseur (6) sont appliqués sur le matériau (34) avec une force d'appui réglable.

10. Dispositif selon la revendication 9, caractérisé en ce que le dispositif de coupe (4) et le dispositif presseur (6) sont montés sur un châssis-support (12) commun qui est monté oscillant autour d'un axe (26) horizontal sur une barre de traction (24), un ressort (32) qui précontraint le dispositif de coupe (4) et le dispositif presseur (6) en direction du matériau (4) étant disposé entre la barre de traction (24) et le châssis-support (12).

11. Dispositif selon la revendication 10, caractérisé en ce que la roue ou les roues (14, 16) du dispositif presseur (6) est/sont réglable(s) en hauteur par rapport au châssis-support (12).

12. Dispositif selon une des revendications 1 à 11, caractérisé en ce que le matériau (34) sous forme de bande peut être délivré en continu par un tambour disposé en amont du dispositif de coupe (4) et peut être amené sous le dispositif de coupe (4), le dispositif de coupe (4) comportant deux disques de coupe (8) espacés l'un par rapport à l'autre dans la direction transversale, qui sont disposés dans la région des deux bords latéraux du matériau (34) et derrière chacun desquels est disposé un dispositif presseur (6).
